# EUROPEAN PATENT SPECIFICATION

(11) **EP 1 992 831 B1**
(45) Date of publication and mention of the grant of the patent: **12.05.2010**
(21) Application number: 08156059.1
(22) Date of filing: 13.05.2008
(51) Int. Cl.: F16D 23/06

(54) **Synchronizing unit for a gearbox of a motor vehicle**
Synchronisiereinheit für ein Getriebe eines Kraftfahrzeugs
Unité de synchronisation pour boîte de vitesses d'un véhicule à moteur

(30) Priority: 14.05.2007 IT TO20070331
(43) Date of publication of application: 19.11.2008
(73) Proprietor: Fiat Group Automobiles S.p.A., 10135 Torino (TO) (IT)
(72) Inventor: Tosato, Luca, I-10135 Torino (IT); Zanzotto, Luigino, I-10135 Torino (IT)
(74) Representative: Rondano, Davide

(56) References cited:
- EP-A- 0 288 718
- EP-A- 0 821 175
- EP-A- 1 072 812
- US-A- 4 736 643
- US-B1- 6 250 446

## Description

The present invention refers to a synchronizing unit for a gearbox of a motor vehicle, as specified in the preamble of Claim 1. Such a unit is disclosed in US-A-4 736 643.

Synchronizing units of the above-defined type are used in motor-vehicle gearboxes to couple for rotation with each other a pair of adjacent gears which are mounted on the same shaft of the gearbox and rotate at different speeds in the uncoupled condition, only after the two gears have been brought to the same rotational speed, whereby the engagement manoeuvre between the engagement toothings of the two gears can take place without unacceptable shocks and loads.

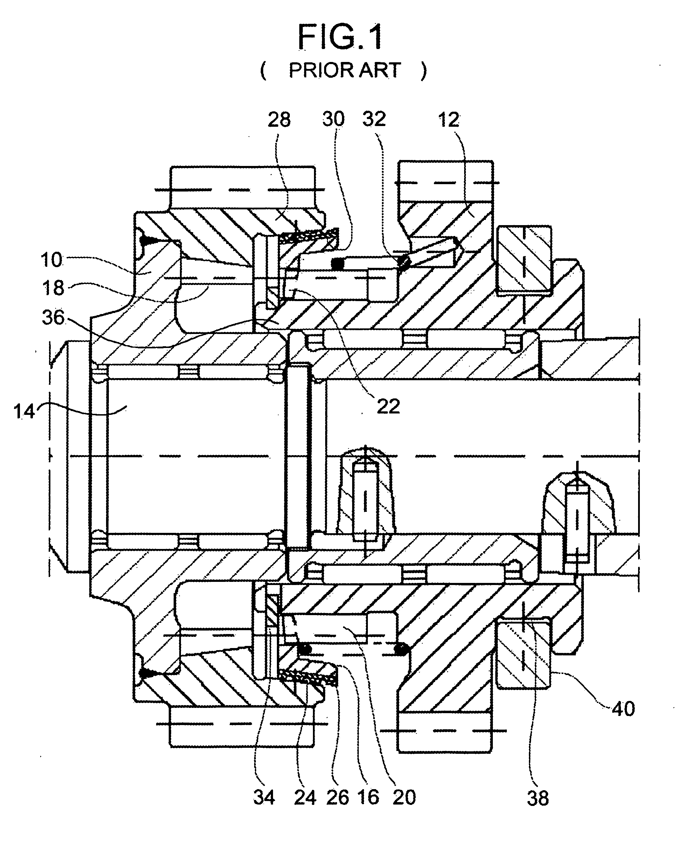

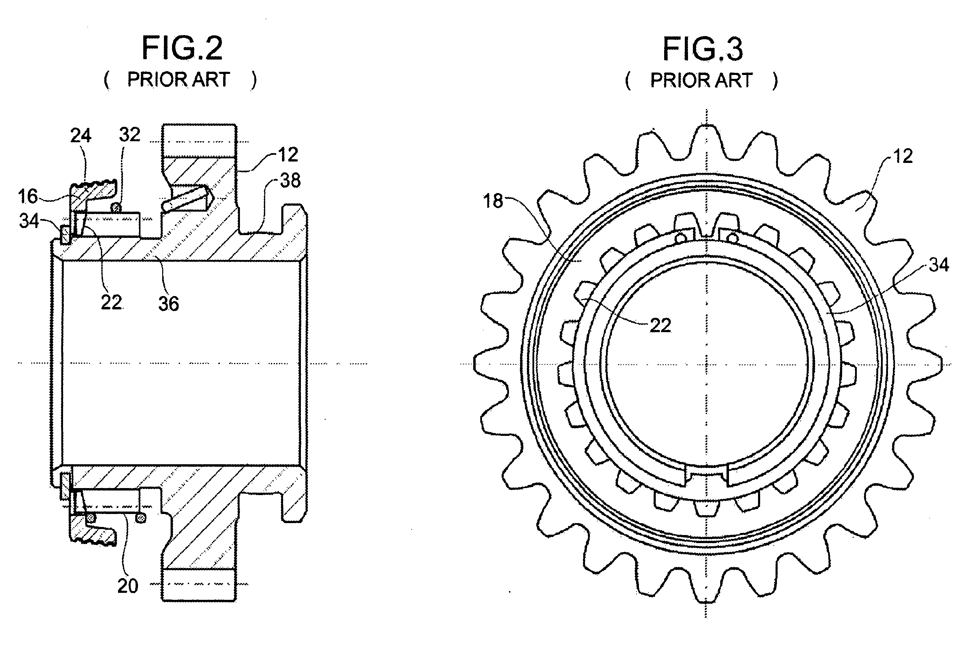

An example of construction of these known synchronizing units is illustrated in Figures 1 to 3. With reference to those Figures, a synchronizing unit for a gearbox of a motor vehicle comprises a first, axially stationary gear 10 (hereinafter simply referred to as stationary gear), a second, axially movable gear 12 (hereinafter simply referred to as sliding gear) mounted adjacent to the stationary gear 10 on a same shaft 14 of the gearbox, and a synchronizing ring 16 interposed between the stationary gear 10 and the sliding gear 12. The stationary gear 10 has an inner engagement toothing 18 adapted to mesh with a corresponding outer engagement toothing 20 of the sliding gear 12 in order to ensure that the two gears 10 and 12 are coupled for rotation with each other. The synchronizing ring 16 has an inner engagement toothing 22 intended to mesh with the outer engagement toothing 20 of the sliding gear 12 in order to drivingly connect the synchronizing ring 16 for rotation with the sliding gear 12. The synchronizing ring 16 forms, on its radially outer side, a coupling conical surface 24 on which a layer of friction material 26 is placed. The stationary gear 10 forms in its turn, on the radially inner side of an annular end portion 28 facing the sliding gear 12, a coupling conical surface 30 against which the coupling conical surface 24 of the synchronizing ring 12 can be urged in order to generate a synchronizing torque due to the friction between the two surfaces and thus to bring the stationary gear 10 to the same angular speed as the synchronizing ring 16, and hence of the sliding gear 12. The synchronizing unit further comprises a spring 32 axially interposed between the synchronizing ring 16 and the sliding gear 12 to urge the synchronizing ring 16 towards the stationary gear 10. The end-of-travel position of the synchronizing ring 16 on the side of the stationary gear 10 is defined by a retaining circlip 34 fitted onto a hub portion 36 of the sliding gear 12 near the outer engagement toothing 20. On the axially opposite side with respect to the outer engagement toothing 20, the hub portion 36 of the sliding gear 12 has a notch 38 in which a control member 40 for controlling the sliding movement of that gear engages.

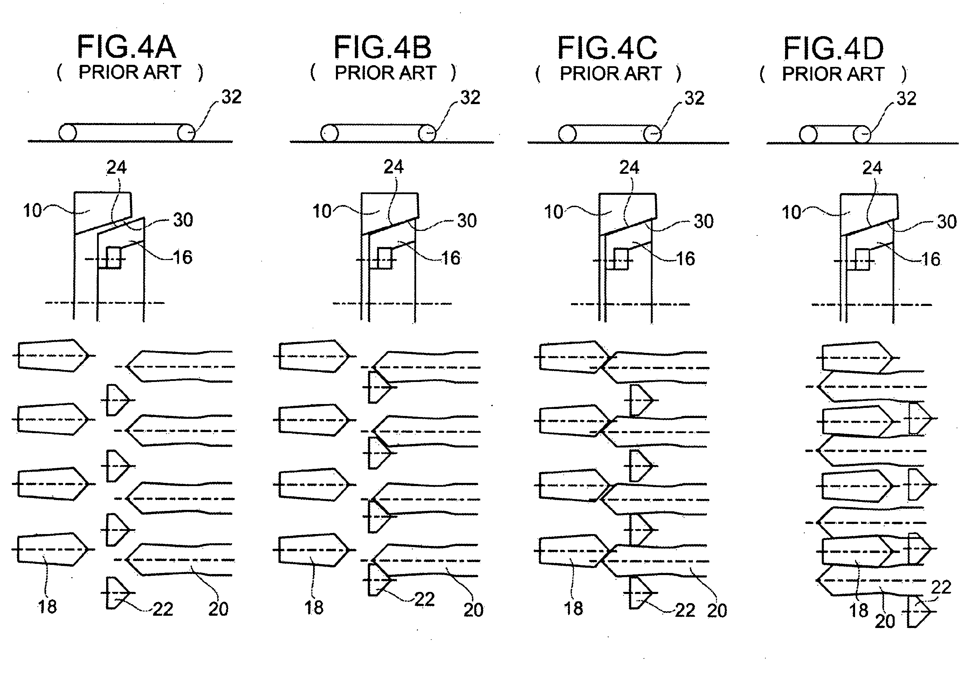

The engagement operation between the engagement toothings 18 and 20 of the respective gears 10 and 12 of the known synchronizing unit illustrated in Figures 1 to 3 will be described now with reference to Figures 4A to 4D.

Figure 4A shows the synchronizing unit in the neutral initial condition, in which the engagement toothings 18 and 20 of the two gears 10 and 12 do not mesh with each other and the coupling conical surfaces 24 and 30 of the synchronizing ring 16 and of the stationary gear 10 are not in abutment with each other.

Figure 4B shows the synchronizing unit in the start-of-synchronization condition, in which the coupling conical surfaces 24 and 30 of the synchronizing ring 16 and of the stationary gear 10 come into abutment with each other and the spring 32 is compressed as a result of the axial movement of the sliding gear 12 towards the stationary gear 10. The friction force acting on the coupling conical surfaces 24 and 30 due to the axial force exerted by the spring 32 and by the inclined front surfaces of the engagement toothings 20 and 22 allows to generate a synchronizing torque between the synchronizing ring 16 and the stationary gear 10 until a condition is reached in which these two components have the same angular speed and are therefore in relative rest. At the beginning of the synchronization phase, the synchronizing ring 16 rotates due to the different angular speeds of the two gears 10 and 12 until the inclined front surfaces of the engagement toothing 22 thereof are brought into abutment against the inclined front surfaces of the engagement toothing 20 of the sliding gear 12. During the synchronization phase the engagement toothing 20 of the sliding gear 12 cannot therefore move towards the engagement toothing 18 of the stationary gear 10, but remains in front abutment against the engagement toothing 22 of the synchronizing ring 16.

Upon completion of the synchronization phase, the synchronizing ring 16 rotates in the opposite direction to the preceding one, thereby allowing the engagement toothing 20 of the sliding gear 12 to move forward again until getting aligned and meshing with the engagement toothing 20 of the stationary gear 10. This start-of-engagement condition is illustrated in Figure 4C. During the forward movement of the sliding gear 12, the spring 32 is further compressed and keeps on with acting on the synchronizing ring 16, thereby impeding the alignment.

Figure 4D finally shows the end-of-engagement condition, in which the engagement toothings 18 and 20 of the stationary gear 10 and of the sliding gear 12, respectively, mesh with each other.

During the disengagement phase, the synchronizing ring 16 travels along the same path as the one of the engagement phase, but in the opposite direction, under the action of the spring 32, sliding along the engagement toothing 20 of the sliding gear 12 until it gets back into abutment against the retaining circlip 34.

The above-described known solution has some shortcomings. First of all, it does not allow to have an outright presynchronization phase. Secondly, the angular or rotational travel of the synchronizing ring relative to the engagement toothing of the sliding gear at the beginning of the synchronization phase is not univocal. Finally, the spring keeps on with exerting an axial force on the synchronizing ring also during the engagement phase, thereby making the alignment of the engagement toothings 20 and 22 difficult, even though it is no more necessary to generate a synchronizing torque by means of the friction between the coupling conical surfaces.

It is therefore an object of the present invention to provide a synchronizing unit for a gearbox of a motor vehicle which makes it possible to overcome the aforesaid shortcomings of the prior art.

This and other objects are fully achieved according to the present invention by virtue of a synchronizing unit having the characteristics specified in the characterizing portion of Claim 1.

Further advantageous characteristics of the invention are defined in the dependent claims.

The characteristics and the advantages of the present invention will become apparent from the following detailed description, given purely by way of non-limiting example with reference to the appended drawings, in which:
Figure 1 is an axial section view of a synchronizing unit for a gearbox of a motor vehicle according to the prior art;
Figure 2 is an axial section view of the sliding gear and of the synchronizing ring forming part of the synchronizing unit of Figure 1;
Figure 3 is a front elevation view of the synchronizing unit of Figure 1;
Figures 4A to 4D schematically show four consecutive positions assumed by the synchronizing unit of Figure 1 during the engagement operation;
Figure 5 is an axial section view of a synchronizing unit for a gearbox of a motor vehicle according to a preferred embodiment of the present invention;
Figure 6 is a front elevation view of the synchronizing unit of Figure 5; and
Figures 7A to 7E schematically show five successive positions assumed by the synchronizing unit of Figure 5 during the engagement operation.

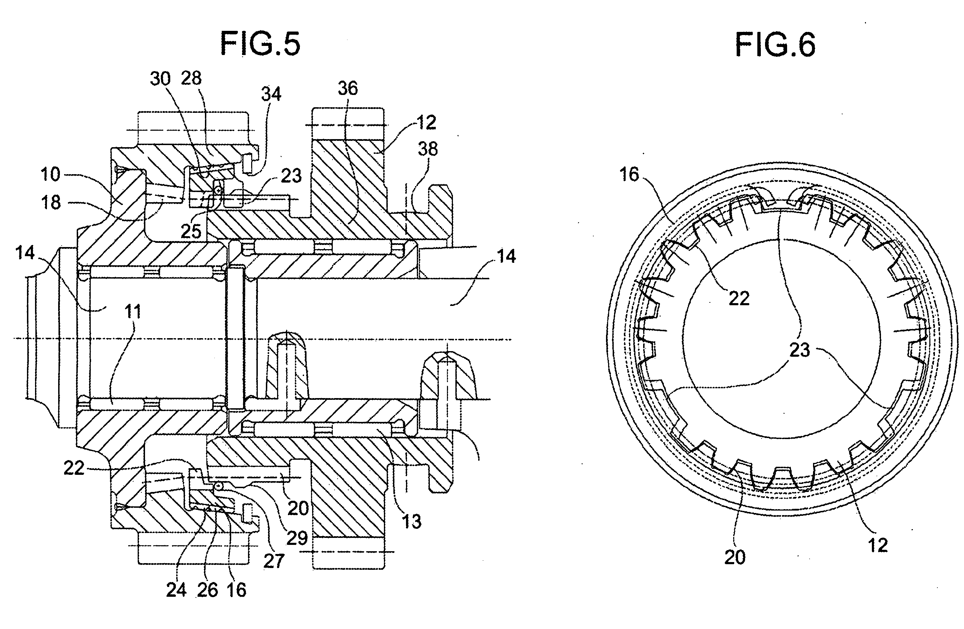

With reference first to Figures 5 and 6, where parts and elements identical to those of Figures 1 to 3 have been given the same reference numerals, a synchronizing unit for a gearbox of a motor vehicle comprises a first, axially stationary gear 10 (hereinafter simply referred to as stationary gear), a second, axially movable gear 12 (hereinafter simply referred to as sliding gear) mounted adjacent to the stationary gear 10 on a same shaft 14 of the gearbox, and a synchronizing ring 16 interposed between the stationary gear 10 and the sliding gear 12. As will become clear in the light of the following description, the two gears might also be inverted, in that the gear 10 might be the sliding gear and the gear 12 the stationary one, as it suffices to have a relative axial movement between the two gears 10 and 12 for the operation of the synchronizing unit. Furthermore, in the illustrated embodiment the two gears 10 and 12 are idly mounted on the shaft 14 by means of respective bearings 11 and 13, such as for example needle bearings.

The stationary gear 10 has an inner engagement toothing 18 adapted to mesh with a corresponding outer engagement toothing 20 of the sliding gear 12 to ensure that the two gears 10 and 12 are coupled for rotation with each other. The synchronizing ring 16 has an inner engagement toothing 22 intended to mesh with the outer engagement toothing 20 of the sliding gear 12 in order to drivingly connect the synchronizing ring 16 for rotation with the sliding gear 12.

Teeth 23 of greater width, which have the function of stopping the angular movement of the synchronizing ring and are therefore referred to hereinafter as stopping teeth, are interposed between the teeth of the inner engagement toothing 22 of the synchronizing ring 16. In the illustrated embodiment, three stopping teeth 23 arranged at 120 degrees are provided. As shown in Figure 6, the tangential play between the stopping teeth 23 of the synchronizing ring 16 and the corresponding pairs of engagement teeth 20 of the sliding gear 12 is greater than the tangential play between the engagement teeth 22 of the synchronizing ring 16 and the engagement teeth 20 of the sliding gear 12. Moreover, as shown in the axial section view of Figure 5, the stopping teeth 23 axially project beyond the teeth of the inner engagement toothing 22 of the synchronizing ring 16 towards the sliding gear 12 and have a groove 25 located in an axially middle position and extending in a plane perpendicular to the axis of the synchronizing ring 16.

The synchronizing ring 16 forms, on its radially inner side, a coupling conical surface 24 on which a layer of friction material 26 is provided. The stationary gear 10 forms in its turn, on the radially inner side of an annular end portion 28 facing the sliding gear 12, a coupling conical surface 30 against which the coupling conical surface 24 of the synchronizing ring 12 can be urged to generate a synchronizing torque due to the friction between the two surfaces and thus to bring the stationary gear 10 to the same angular speed as the one of the synchronizing ring 16, and hence of the sliding gear 12.

The synchronizing unit further comprises a presynchronization circlip 27 received in the grooves 25 of the stopping teeth 23 so as to be axially restrained to the synchronizing ring 16, as well as a retaining circlip 34 fitted onto the annular end portion 28 of the stationary gear 10 to axially retain the synchronizing ring 16 on the side of the sliding gear 12. The outer engagement toothing 20 of the sliding gear 12 forms a radial projection 29 of trapezoidal axial section, which acts on the presynchronization circlip 27 as a cam to bring about the presynchronization phase, as will be better explained further on.

On the axially opposite side with respect to the outer engagement toothing 20, a hub portion 36 of the sliding gear 12 has a groove 38 in which a control member (not shown) arranged to control the sliding movement of that gear engages.

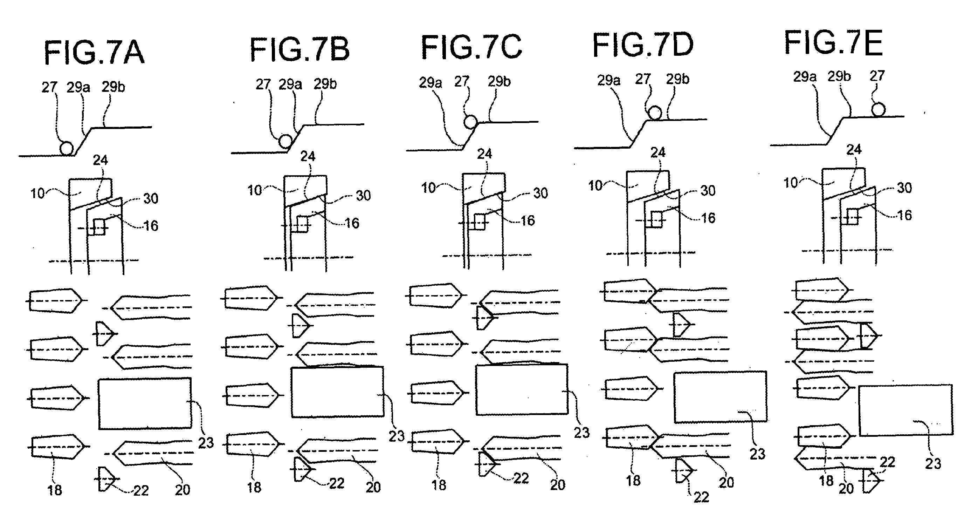

The engagement operation between the engagement toothings 18 and 20 of the respective gears 10 and 12 of the synchronizing unit according to the invention will be described now with reference to Figures 7A to 7E.

Figure 7A, like Figure 5, shows the synchronizing unit in the initial neutral condition, in which the engagement toothings 18 and 20 of the two gears 10 and 12 do not mesh with each other and the coupling conical surfaces 24 and 30 of the synchronizing ring 16 and of the stationary gear 10 are not in abutment with each other. In such a condition, the presynchronization circlip 27 is in abutment with the outer surface of the teeth of the outer engagement toothing 20 of the sliding gear 12.

Figure 7B shows the synchronizing unit in the start-of-presynchronization condition, in which a ramp-like inclined surface 29a of the radial projection 29 abuts with the presynchronization circlip 27 as a result of the axial movement of the sliding gear 12 towards the stationary gear 10 and tends both to urge it axially towards the stationary gear 10 and to expand it radially. Under the action of the radial projection 29, the presynchronization circlip 27 axially urges the synchronizing ring 16 towards the stationary gear 10 and thus brings the coupling conical surfaces 24 and 30 of the synchronizing ring 16 and of the stationary gear 10 into abutment with each other. The friction force acting on the coupling conical surfaces 24 and 30 due to the axial force exerted by the presynchronization circlip 27, and the different angular speeds of the two gears 10 and 12 make it possible to generate a torque which causes the synchronizing ring 16 to rotate until the flanks of the stopping teeth 23 come into abutment with the flanks of the teeth of the engagement toothing 20 of the sliding gear 12. During the presynchronization phase, the inclined front surfaces of the engagement toothing 22 of the synchronizing ring 16 and of the engagement toothing 20 of the sliding gear 12 are not in abutment against each other.

Figure 7C shows the synchronizing unit in the end-of-presynchronization condition, in which the inclined front surfaces of the engagement toothing 22 of the synchronizing ring 16 come into abutment with the corresponding inclined front surfaces of the engagement toothing 20 of the sliding gear 12a as a result of a further axial displacement of the sliding gear 12 towards the stationary gear 10. The outright synchronization phase thus begins, in which phase the engagement toothing 20 of the sliding gear 12 cannot move towards the engagement toothing 18 of the stationary gear 10, but remains in front abutment against the engagement toothing 22 of the synchronizing ring 16. The friction force acting on the coupling conical surfaces 24 and 30 due to the axial force exerted by the inclined front surfaces of the engagement toothings 20 and 22 makes it possible to generate a synchronizing torque between the synchronizing ring 16 and the stationary gear 10 until a condition is reached in which these two components have the same angular speed and are therefore in relative rest. In the condition shown in Figure 7C, the presynchronization circlip 27 is located at the upper edge of the ramp-like inclined surface 29a of the radial projection 29.

Upon completion of the synchronization phase (Figure 7D), the synchronizing ring 16 rotates in the direction opposite to the first one, thus allowing the outer engagement toothing 20 of the sliding gear 12 to move again towards the inner engagement toothing 18 of the stationary gear 10, thereby coming into alignment and engagement with this latter. During the forward movement of the sliding gear 12, the presynchronization circlip 27 is no more in abutment with the ramp-like inclined surface 29a of the radial projection 29, but slides on a flat upper portion 29b of this latter. Accordingly, the presynchronization circlip 27 does not stress the synchronizing ring 16 any more and hence does not impede the alignment between the engagement toothings 18 and 20 of the two gears 10 and 12.

Finally, Figure 7E shows the end-of-engagement condition, in which the engagement toothings 20 and 22 of the stationary gear 10 and of the sliding gear 12 mesh with each other.

In the disengagement operation, the presynchronization circlip 27 follows in the opposite direction the same path as the one followed during the engagement operation, sliding along the outline of the radial projection 29. To this end, the retaining circlip 25 ensures axial retention of the synchronizing ring 16 and hence of the groove 25 receiving the presynchronization circlip 27.

As will be appreciated in the light of the preceding description, a synchronizing unit according to the invention makes it possible to obtain an outright presynchronization phase, to ensure a univocal angular movement (rotation) of the synchronizing ring relative to the engagement toothing of the sliding gear and to prevent the synchronizing ring from being axially loaded during the engagement phase.

Naturally, the principle of the invention remaining unchanged, the embodiments and constructional details may vary widely with respect to those described and illustrated purely by way of non-limiting example.

## Claims

1. Synchronizing unit for a gearbox of a motor vehicle, the synchronizing unit comprising
a first gear (10) having an inner engagement toothing (18),
a second gear (12) adjacent to the first gear (10) and axially movable relative thereto, the second gear (12) having an outer engagement toothing (20) arranged to mesh with the inner engagement toothing (18) of the first gear (10),
a synchronizing ring (16) interposed between the first gear (10) and the second gear (12), the synchronizing ring (16) having an inner engagement toothing (22) arranged to mesh with the outer engagement toothing (20) of the second gear (12) and forming an outer conical coupling surface (24) arranged to be brought into abutment with a corresponding inner conical coupling surface (30) of the first gear (10) to allow the transmission of the torque by friction between the first gear (10) and the synchronizing ring (16),
resilient means (27) interposed between the second gear (12) and the synchronizing ring (16),
**characterized in that** the synchronizing ring (16) includes stopping means (23) arranged to determine univocally a relative rotation between the inner engagement toothing (22) of the synchronizing ring (16) and the outer engagement toothing (20) of the second gear (12) when the conical coupling surfaces (24, 30) of the synchronizing ring (16) and of the first gear (10) are brought into abutment against each other, and
**in that** the second gear (12) includes cam means (29) configured so as to exert an axial load on the resilient means (27) tending to urge the conical coupling surfaces (24, 30) of the synchronizing ring (16) and of the first gear (10) into abutment against each other when the first and second gears (10, 12) are moved towards each other, and so as not to exert any axial load on the resilient means (27) once the engagement toothings (18, 20) of the first and second gears (10, 12) have begun to mesh.

2. Synchronizing unit according to Claim 1, wherein the stopping means include stopping teeth (23) which are interposed between the teeth of the inner engagement toothing (22) of the synchronizing ring (16) and are formed in such a manner that the tangential play between the stopping teeth (23) and the corresponding pairs of teeth of the outer engagement toothing (20) of the second gear (12) is greater than the tangential play between the teeth of the inner engagement toothing (22) of the synchronizing ring (16) and the teeth of the outer engagement toothing (20) of the second gear (12).

3. Synchronizing unit according to Claim 2, wherein the stopping teeth (23) project axially beyond the teeth of the inner engagement toothing (22) of the synchronizing ring (16) towards the second gear (12).

4. Synchronizing unit according to Claim 3, wherein each stopping tooth (23) has, in a portion thereof axially projecting towards the second gear (12) beyond the teeth of the inner engagement toothing (22) of the synchronizing ring (16), a groove (25) extending in a plane perpendicular to the axis of the synchronizing ring (16).

5. Synchronizing unit according to any of the preceding claims, wherein the resilient means include a circlip (27) axially retained to the synchronizing ring (16).

6. Synchronizing unit according to Claims 4 and 5, wherein the circlip (27) is received in the grooves (25).

7. Synchronizing unit according to any of the preceding claims, wherein the cam means include a radial projection (2) of trapezoidal axial section formed by the outer engagement toothing (20) of the second gear (12).

8. Synchronizing unit according to Claims 5 and 7, wherein the radial projection (29) has a first surface (29a) having an outline inclined to the axis of the synchronizing ring (16).

9. Synchronizing unit according to Claim 8, wherein the radial projection (29) has a second surface (29b) adjacent to the first surface (29a) and having an outline parallel to the axis of the synchronizing ring (16).

10. Gearbox for a motor vehicle, comprising a synchronizing unit according to any of the preceding claims.

## Patentansprüche

1. Synchronisiereinheit für ein Getriebe eines Kraftfahrzeugs, wobei die Synchronisiereinheit enthält:
ein erstes Zahnrad (10), das eine Inneneingriffszahnung (18) hat,
ein zweites Zahnrad (12) benachbart dem ersten Zahnrad (10) und axial beweglich im Bezug dazu, wobei das zweite Zahnrad (12) eine Außeneingriffszahnung (20) hat, die so beschaffen ist, dass sie in die Inneneingriffszahnung (18) des ersten Zahnrades (10) eingreift,
einen Synchronisierring (16), der zwischen dem ersten Zahnrad (10) und dem zweiten Zahnrad (12) angeordnet ist, wobei der Synchronisierring (16) eine Inneneingriffszahnung (22) hat, die dazu eingerichtet ist, in die Außeneingriffszahnung (20) des zweiten Zahnrades (12) einzugreifen und eine äußere konische Kopplungsfläche (24) bildet, die dazu eingerichtet ist, in Anlage mit einer entsprechenden inneren konischen Kopplungsfläche (30) des ersten Zahnrades (10) gebracht zu werden, um die Übertragung des Drehmomentes durch Reibung zwischen dem ersten Zahnrad (10) und dem Synchronisierring (16) zuzulassen,
elastische Einrichtungen (27), die zwischen dem zweiten Zahnrad (12) und dem Synchronisierring (16) angeordnet sind,
**dadurch gekennzeichnet, dass** der Synchronisierring (16) Anschlageinrichtungen (23) enthält, die dazu eingerichtet sind, eindeutig eine Relativdrehung zwischen der Inneneingriffszahnung (22) des Synchronisierringes (16) und der Außeneingriffszahnung (20) des zweiten Zahnrades (12) zu bestimmen, wenn die konischen Kopplungsflächen (24, 30) des Synchronisierringes (16) und des ersten Zahnrades (10) gegeneinander in Anlage gebracht werden, und
dass das zweite Zahnrad (12) Nockeneinrichtungen (29) enthält, die so beschaffen sind, dass sie eine axiale Kraft auf die elastische Einrichtung (27) ausüben, die dazu neigt, die konischen Kopplungsflächen (24, 30) des Synchronisierringes (16) und des ersten Zahnrades (10) gegeneinander in Anlage zu bringen, wenn das erste und das zweite Zahnrad (10, 12) aufeinander zu bewegt werden, und so, dass sie keine axiale Kraft auf die elastische Einrichtung (27) ausüben, sobald die Eingriffszahnungen (18, 20) des ersten und des zweiten Zahnrades (10, 12) begonnen haben ineinanderzugreifen.

2. Synchronisiereinheit nach Anspruch 1, bei der die Anschlageinrichtungen Anschlagzähne (23) enthalten, die zwischen den Zähnen der Inneneingriffszahnung (22) des Synchronisierringes (16) angeordnet und derart ausgebildet sind, dass das tangentiale Spiel zwischen den Anschlagzähnen (23) und den entsprechenden Zahnpaaren der Außeneingriffszahnung (20) des zweiten Zahnrades (12) größer ist als das tangentiale Spiel zwischen den Zähnen der Inneneingriffszahnung (22) des Synchronisierringes (16) und den Zähnen der Außeneingriffszahnung (20) des zweiten Zahnrades (12).

3. Synchronisiereinheit nach Anspruch 2, bei der die Anschlagzähne (23) axial über die Zähne der Inneneingriffszahnung (22) des Synchronisierringes (16) zum zweiten Zahnrad (12) hervorragen.

4. Synchronisiereinheit nach Anspruch 3, bei der jeder Anschlagzahn (23) in einem Abschnitt desselben, der zu dem zweiten Zahnrad (12) über die Zähne der Inneneingriffszahnung (22) des Synchronisierringes (16) axial hervorragt, eine Rille (25) aufweist, die in einer Ebene senkrecht zu Achse des Synchronisierringes (16) verläuft.

5. Synchronisiereinheit nach einem der vorhergehenden Ansprüche, bei der die elastischen Einrichtungen einen Federring (27) enthalten, der axial am Synchronisierring (16) gehalten ist.

6. Synchronisiereinheit nach Anspruch 4 und 5, bei der der Federring (27) in den Rillen (25) aufgenommen ist.

7. Synchronisiereinheit nach einem der vorhergehenden Ansprüche, bei der die Nockeneinrichtungen einen radialen Vorsprung (2) eines trapezförmigen Achsabschnittes enthalten, der durch die Außeneingriffszahnung (20) des zweiten Zahnrades (12) ausgebildet ist.

8. Synchronisiereinheit nach Anspruch 5 und 7, bei der der radiale Vorsprung (29) eine erste Oberfläche (29a) hat, die einen Umriss hat, der zur Achse des Synchronisierringes (16) geneigt ist.

9. Synchronisiereinheit nach Anspruch 8, bei der der radiale Vorsprung (29) eine zweite Oberfläche (29b) benachbart der ersten Oberfläche (29a) hat, die einen Umriss hat, der parallel zur Achse des Synchronisierringes (16) ist.

10. Getriebe für ein Kraftfahrzeug, enthaltend eine Synchronisiereinheit nach einem der vorhergehenden Ansprüche.

## Revendications

1. Unité de synchronisation pour une boîte de vitesses d'un véhicule à moteur, l'unité de synchronisation comportant
un premier pignon (10) ayant une denture d'engagement intérieure (18),
un deuxième pignon (12) adjacent au premier pignon (10) et axialement mobile par rapport à celui-ci, le deuxième pignon (12) ayant une denture d'engagement extérieure (20) prévue pour venir en prise avec la denture d'engagement intérieure (18) du premier pignon (10),
une bague de synchronisation (16) interposée entre le premier pignon (10) et le deuxième pignon (12), la bague de synchronisation (16) ayant une denture d'engagement intérieure (22) prévue pour venir en prise avec la denture d'engagement extérieure (20) du deuxième pignon (12) et formant une surface d'accouplement conique extérieure (24) prévue pour être amenée en butée avec une surface d'accouplement conique intérieure (30) correspondante du premier pignon (10) de façon à permettre la transmission du couple par friction entre le premier pignon (10) et la bague de synchronisation (16),
des moyens élastiques (27) interposés entre le deuxième pignon (12) et la bague de synchronisation (16),
**caractérisée en ce que** la bague de synchronisation (16) comprend des moyens d'arrêt (23) prévus pour déterminer de manière univoque une rotation relative entre la denture d'engagement intérieure (22) de la bague de synchronisation (16) et la denture d'engagement extérieure (20) du deuxième pignon (12) quand les surfaces d'accouplement coniques (24, 30) de la bague de synchronisation (16) et du premier pignon (10) sont amenées en butée l'une contre l'autre, et
**en ce que** le deuxième pignon (12) comprend des moyens de came (29) configurés de façon à exercer une charge axiale sur les moyens élastiques (27) tendant à pousser les surfaces d'accouplement coniques (24, 30) de la bague de synchronisation (16) et du premier pignon (10) en butée l'une contre l'autre quand les premier et deuxième pignons (10, 12) sont déplacés l'un vers l'autre, et de façon à ne pas exercer de charge axiale quelconque sur les moyens élastiques (27) une fois que les dentures d'engagement (18, 20) des premier et deuxième pignons (10, 12) ont commencé à venir en prise.

2. Unité de synchronisation selon la revendication 1, dans laquelle les moyens d'arrêt comprennent des dents d'arrêt (23) qui sont interposées entre les dents de la denture d'engagement intérieure (22) de la bague de synchronisation (16) et sont formées d'une manière telle que le jeu tangentiel entre les dents d'arrêt (23) et les paires de dents correspondantes de la denture d'engagement extérieure (20) du deuxième pignon (12) est plus grand que le jeu tangentiel entre les dents de la denture d'engagement intérieure (22) de la bague de synchronisation (16) et les dents de la denture d'engagement extérieure (20) du deuxième pignon (12).

3. Unité de synchronisation selon la revendication 2, dans laquelle les dents d'arrêt (23) dépassent axialement au-delà des dents de la denture d'engagement intérieure (22) de la bague de synchronisation (16) vers le deuxième pignon (12).

4. Unité de synchronisation selon la revendication 3, dans laquelle chaque dent d'arrêt (23) a, dans une partie de celle-ci dépassant axialement vers le deuxième pignon (12) au-delà des dents de la denture d'engagement intérieure (22) de la bague de synchronisation (16), une rainure (25) s'étendant dans un plan perpendiculaire à l'axe de la bague de synchronisation (16).

5. Unité de synchronisation selon l'une quelconque des revendications précédentes, dans laquelle les moyens élastiques comprennent un anneau élastique (27) retenu axialement sur la bague de synchronisation (16).

6. Unité de synchronisation selon les revendications 4 et 5, dans laquelle l'anneau élastique (27) est reçu dans les rainures (25).

7. Unité de synchronisation selon l'une quelconque des revendications précédentes, dans laquelle les moyens de came comprennent une saillie radiale (2) de section axiale trapézoïdale formée par la denture d'engagement extérieure (20) du deuxième pignon (12).

8. Unité de synchronisation selon les revendications 5 et 7, dans laquelle la saillie radiale (29) a une première surface (29a) ayant un contour incliné vers l'axe de la bague de synchronisation (16).

9. Unité de synchronisation selon la revendication 8, dans laquelle la saillie radiale (29) a une deuxième surface (29b) adjacente à la première surface (29a) et ayant un contour parallèle à l'axe de la bague de synchronisation (16).

10. Boite de vitesses pour un véhicule à moteur, comportant une unité de synchronisation selon l'une quelconque des revendications précédentes.
